# EUROPÄISCHE PATENTSCHRIFT

(11) **EP 3 883 838 B1**
(45) Veröffentlichungstag und Bekanntmachung des Hinweises auf die Patenterteilung: **23.08.2023**
(21) Anmeldenummer: 19798559.1
(22) Anmeldetag: 30.10.2019
(51) Int. Cl.: B62D 1/04, B62D 15/02

(54) **LENKHANDHABE FÜR EIN KRAFTFAHRZEUG**
STEERING HANDLE FOR A MOTOR VEHICLE
MANETTE DE DIRECTION POUR UN VÉHICULE AUTOMOBILE

(30) Priorität: 21.11.2018 DE 102018219951
(43) Veröffentlichungstag der Anmeldung: 29.09.2021
(60) Teilanmeldung: 23185571.9
(73) Patentinhaber: VOLKSWAGEN AKTIENGESELLSCHAFT, 38440 Wolfsburg (DE)
(72) Erfinder: FRANKE, Kai, 39576 Stendal (DE); WOHLLEBE, Thomas, 38547 Calberlah (DE)
(86) Internationale Anmeldenummer: PCT/EP2019/079664
(87) Internationale Veröffentlichungsnummer: WO 2020/104160

(56) Entgegenhaltungen:
- WO-A1-2016/169684
- DE-A1-102013 110 865
- DE-A1-102015 119 185
- FR-A1- 2 861 657
- US-A1- 2015 224 877

## Beschreibung

Die vorliegende Erfindung betrifft eine Lenkhandhabe für ein Kraftfahrzeug gemäß dem Oberbegriff des Anspruchs 1 und ein Verfahren zum Betrieb einer Lenkhandhabe gemäß dem Oberbegriff des Anspruchs 4.

Eine Lenkhandhabe ist ein Teil eines Lenksystems eines Kraftfahrzeuges. Die Lenkhandhabe kann ein Lenkrad, aber auch ein joystickartiges oder diskusartiges Steuerelement am oder im Kraftfahrzeug sein. Der Fahrer kann mittels der Lenkhandhabe seinen Lenkwunsch, üblicherweise durch Verdrehen eines Lenkrads, auf die Räder übertragen. Zumeist ist für diese Übertragung die Lenkhandhabe mit den Rädern des Fahrzeuges mechanisch über weitere Komponenten eines Lenksystems gekoppelt. Diese Art Lenkhandhabe wird im Folgenden als gekoppelt bezeichnet.

Durch die Weiterentwicklung automatischer Fahrfunktionen und Fahrassistenzsysteme übernimmt das Kraftfahrzeug immer mehr Fahraufgaben, die früher der Fahrer bewältigen musste. Je höher die Automatisierungsstufe des Kraftfahrzeugs ist, desto weniger und kürzer muss der Mensch eingreifen, um das Kraftfahrzeug zu steuern. Ab einer SAE-J3016-Stufe von 3, bei der von voll-, hoch- und bedingt automatischen Fahren gesprochen wird, übernimmt das Kraftfahrzeug die Führung dauerhaft, also auch die Querführung. Ein Eingriff durch den Fahrer ist nicht mehr notwendig. Somit kann der Fahrer die Hände von der Lenkhandhabe nehmen.

Automatische Fahrsysteme sind in der Lage, auf plötzlich auftretende Gefahrensituationen durch hochdynamische Lenkmanöver angemessen zu reagieren, um Unfälle zu vermeiden bzw. die Unfallschwere zu mindern. Dies bedeutet im Falle von hochdynamischen Lenkmanövern, dass sich eine gekoppelte Lenkhandhabe mit hoher Geschwindigkeit mitbewegt. Bei solch einer sich mitbewegenden Lenkhandhabe besteht jedoch durch die schnellen oder abrupten Bewegungen ein Verletzungsrisiko für die Insassen des Kraftfahrzeugs, z. B. für Hände oder Finger, falls ein Fahrzeuginsasse in gefährlichen Fahrsituationen eingreifen will oder bei starken Fahrmanövern gegen die sich bewegende Lenkhandhabe geschleudert wird.

Aus dem Stand der Technik sind Steer-by-wire-Systeme bekannt. Bei diesem System wird ein Lenkbefehl ausschließlich elektrisch zu einem elektromechanischen Aktor der Räder weitergeleitet. Die Lenkhandhabe ist mechanisch entkoppelt von den Rädern. Dadurch kann in einem automatischen Fahrmodus ein Mitbewegen der Lenkhandhabe verhindert und somit das Verletzungsrisiko für einen Fahrzeuginsassen verringert werden. Jedoch hat ein solches Steer-by-wire-System einen hochkomplexen Aufbau und muss hohe technische Anforderungen erfüllen, um die geforderte funktionale Sicherheit gewährleisten zu können.

In der in DE 10 2015 207 477 A1 dargestellten Anordnung ist die Lenkhandhabe zwischen zwei Positionen schwenkbar. Im manuellen Fahrmodus befindet sich die Lenkhandhabe in einer Gebrauchsposition und der Fahrer kann der Fahraufgabe nachkommen. Durch Kippen der Lenkhandhabe in eine Ruhelage findet eine Aktivierung eines automatischen Fahrmodus statt. Bei der dargestellten Lenkhandhabe kann es sich um eine Lenkhandhabe für ein gekoppeltes Lenksystem eines Kraftfahrzeugs handeln.

Der Fachmann entnimmt der DE 10 2013 110 865 A1 eine Lenkhandhabe, die durch den Fahrer zwischen zwei Positionen verstellbar ist. Befindet sich die Lenkhandhabe in der vom Fahrer entfernten Position ist der automatische Fahrmodus aktiviert. In einer zum Fahrer näher befindlichen Position sind menschliche Eingriffe an der Lenkhandhabe möglich. Auch bei dieser Lenkhandhabe ist eine gekoppelte Ausführung möglich.

Aus der DE 10 2015 119 185 A1 und FR 2 861 657 A1 ist eine mehrteilige Lenkhandhabe mit einem Griffbereich bekannt, bei der der Griffbereich in einen aktivierten Zustand (manuellen Fahrmodus) in einem deaktivierten Zustand (automatischen Fahrmodus) verschoben werden kann und so eine Umfangsänderung der Lenkhandhabe verwirklicht wird.

Die US 2015/224887 A1 offenbart eine Lenkhandhabe für ein Fahrzeug mit einem Touch Screen. Sobald das Fahrzeug in einem automatischen Fahrmodus wechselt, wird der Touch Screen über die Lenkhandhabe verschoben und das Display vergrößert, um auf diese Weise die Nutzung zu ermöglichen.

Der vorstehend aufgeführte Stand der Technik offenbart Lenkhandhaben, die zwischen manuellem und automatischem Fahrmodus veränderbar sind. Jedoch stellen diese Lenkhandhaben im automatischen Fahrmodus durch den gekoppelten Zustand und die resultierenden Eigenbewegungen im automatischen Fahrmodus weiterhin ein Verletzungsrisiko dar. Die Lenkhandhaben im Stand der Technik werden abgeklappt oder vom Fahrer entfernt, aber nicht in Ihrer Form derart verändert, dass ein Eingreifen eines Insassen im automatischen Fahrmodus nicht möglich ist. Darüber hinaus benötigen die Lenkhandhaben aus dem Stand der Technik durch das Abklappen und Umpositionieren mehr Bauraum. Nur durch die konstruktiv aufwändige Weise der Entkopplung der Lenkhandhabe von den Rädern kann im automatischen Fahrmodus der Insassenschutz sichergestellt werden.

Ausgehend vom beschriebenen Stand der Technik ist es nun die Aufgabe der vorliegenden Erfindung, eine Lenkhandhabe bereitzustellen, die mit den Fahrzeugrädern weiterhin gekoppelt sein kann und dennoch im automatischen Fahrmodus die Verletzungsgefahr eines Fahrzeuginsassen auf einfache und damit kostengünstige Weise verringert.

Erfindungsgemäß wird diese Aufgabe durch eine Lenkhandhabe für ein Kraftfahrzeug gemäß dem Anspruch 1 und ein Verfahren zum Betrieb einer Lenkhandhabe gemäß dem Anspruch 5 gelöst.

Die vorgenannte Aufgabe wird erfindungsgemäß durch eine Lenkhandhabe für ein Kraftfahrzeug gelöst, das mit einem automatischen und mindestens einem teilautomatischen und/oder manuellen Fahrmodus ausgestattet ist. Die Lenkhandhabe umfasst ein Außenelement, ein Innenelement und mindestens ein Verbindungselement, wobei letzteres zum Verbinden des Außenelements mit dem Innenelement dient. Im teilautomatischen und/oder manuellen Fahrmodus weist die Lenkhandhabe mindestens einen Griffbereich auf. Dieser Griffbereich ermöglicht den Eingriff eines Fahrzeuginsassen an der Lenkhandhabe. Im automatischen Fahrmodus ist der mindestens eine Griffbereich zumindest teilweise verdeckt.

Zum einen ist es mit dieser erfindungsgemäßen Lenkhandhabe für den Fahrer möglich, im teilautomatischen und/oder manuellen Fahrmodus die Fahraufgabe durch Eingreifen an den Griffbereich und Führung der Lenkhandhabe durchzuführen. Der Fahrer kann die Lenkhandhabe ergonomisch gut greifen und sicher mit den Händen führen. Ohne zusätzliche technische Umstellungen am restlichen Lenksystem des Kraftfahrzeugs sowie durch eine einfache und kostengünstige Umgestaltung der Lenkhandhabe soll im automatischen Fahrmodus die Sicherheit der Insassen erhöht werden, indem der Griffbereich verdeckt ist. Der Fahrer kann bei unerwarteten Fahrmanövern nicht mehr intuitiv eingreifen und sich so durch die automatische und schnelle Bewegung der Lenkhandhabe verletzen. Darüber hinaus verringert sich das Risiko, dass sich bei schnellen Fahrmanövern Körperteile eines Fahrzeuginsassen durch Herumschleudern in den Griffbereich der Lenkhandhabe gelangen und verletzt werden.

Unter einem Kraftfahrzeug wird ein durch einen Motor angetriebenes mobiles Verkehrsmittel zum Transport von Personen oder Gütern verstanden. Ein Kraftfahrzeug kann auch ein Roboter für eben jene Aufgabe sein. Bei einer Lenkhandhabe in Form eines Lenkrads kann das Außenelement der Lenkradkranz, das Innenelement die Lenkradnabe oder der Pralltopf und das Verbindungselement eine Lenkradspeiche sein.

Unter automatischem Fahren wird auch autonomes, automatisiertes oder pilotiertes Fahren verstanden. Im manuellen Fahrmodus übernimmt der Fahrer die Querführung des Fahrzeugs durch Steuereingaben, insbesondere durch Lenkeingaben, vollständig oder nahezu vollständig selbst. Im SAE-J3016-System wird das manuelle Fahren mit Stufe 0 deklariert. Mit teilautomatisiertem Fahren ist eine SAE-J3016-Stufe von 1 bis 2 gemeint, bei der der Fahrer zumindest nach Aufforderung zum Eingreifen die Hände an die Lenkhandhabe nehmen muss. Ein Fahrzeug im voll-, hoch- oder bedingt automatischen Fahrmodus (SAE-J3016-Stufe ab Stufe 3) kann ohne menschliche Eingriffe gesteuert werden. Unter einem automatischen Fahrmodus wird in dieser Anmeldung ein Fahrmodus ab der SAE-J3016-Stufe 3 verstanden.

Der Griffbereich der Lenkhandhabe bietet dem Fahrer einen Eingriff zur Steuerung des Fahrzeugs und steht damit während dieses Eingriffs im Kontakt mit dem Fahrer. Dieser Bereich kann am oder zwischen dem Außenelement, Innenelement und/oder dem mindestens einen Verbindungselement sein. Da Lenkhandhaben in der Regel mit den Händen geführt werden, können sie ergonomisch so geformt sein, dass ein Greifen bzw. ein Umgreifen des Griffbereichs mit den Händen ermöglicht wird. Für ein Greifen kann die Lenkhandhabe im Griffbereich zumindest eine Einbuchtung, Mulde, Durchgriff und/oder einen Freiraum besitzen, damit die Hand sicher die Lenkhandhabe greifen und damit führen kann.

Es ist bevorzugt, dass die Lenkhandhabe mindestens ein Abdeckelement umfasst. Der Griffbereich ist im automatischen Fahrmodus zumindest teilweise von diesem mindestens einen Abdeckelement verdeckt. Das Abdeckelement kann Teil des Außenelements, des Innenelements und/oder des Verbindungselements sein. Vorteilhafterweise kann mit diesem Abdeckelement durch einfache und kostengünstige Ausgestaltung der Griffbereich verdeckt werden. Es ist vorstellbar, dass das Abdeckelement eine Art Schieber ist. Dieser Schieber ist ein konstruktiv leicht anzufertigendes Bauteil, das auf einem vorgegebenen Weg verschiebbar im oder an der Lenkhandhabe gelagert ist. Durch diese Konstruktion kann der Schieber eine formschlüssige und wieder lösbare Verbindung zu den restlichen Bauteilen der Lenkhandhabe aufbauen. Mögliche Materialien für ein Abdeckelement sind Metalle, aber auch Polymere, wie Polyurethane, oder Thermoplaste, die faserverstärkt oder zu einem Gewebe ausgestaltet sein können. Vorteilhafterweise sind dies Materialien, die bei Belastung bruchsicher sind und nur geringe Verformung zulassen. Vorzugsweise befindet sich das Abdeckelement im teilautomatischen und/oder manuellen Fahrmodus in einer eingefahrenen Position zumindest teilweise hinter der Lenkhandhabe oder in einem vorgesehenen Verstauraum der Lenkhandhabe. In der Folge ist der Griffbereich frei und der Fahrer kann der Fahraufgabe nachkommen.

Es ist möglich, dass das Abdeckelement mit einem Aktor zwischen den Positionen im teilautomatischen und/oder manuellen Fahrmodus und im automatischen Fahrmodus verschoben wird. Vorteilhafterweise kann so bei einem Wechsel der Fahrmodi ohne menschliches Eingreifen das Abdeckelement mit dem Aktor in die vorgesehene Position gebracht werden. Diese Verschiebung kann längs der Rotationsachse der Lenkhandhabe verlaufen, also in Richtung des Fahrers. Auch denkbar ist, dass das Abdeckelement radial um die Rotationsachse oder von der Rotationsachse wegbewegt wird.

Bei einer weiteren Ausführungsform ist das Abdeckelement in seiner Form veränderbar. Im automatischen Fahrmodus ist das Abdeckelement groß und verdeckt den Griffbereich, wohingegen es im teilautomatischen und/oder manuellen Fahrmodus ein kleineres Volumen besitzt. Möglich wäre dies z. B. durch eine hohlkörperartige Gestaltung aus elastischem Material. Durch Einleitung von flüssigen oder gasförmigen Stoffen dehnt sich das Abdeckelement aus und verdeckt zumindest teilweise den Griffbereich. Aber auch faltbare oder klappbare Ausgestaltungen sind denkbar. Ein kleineres Abdeckelement kann im teilautomatischen und/oder manuellen Fahrmodus leichter in, am oder hinter einem Element der Lenkhandhabe positioniert werden, ohne dass es den Fahrer bei seinen Eingriffen stört.

Gemäß der Erfindung verdecken mindestens zwei Abdeckelemente im automatischen Fahrmodus den mindestens einen Griffbereich. Vorteilhaft ist dies, weil jedes einzelne Abdeckelement so kleiner und damit bauraumoptimiert gestaltet werden kann. Die Verdeckung mit den Abdeckelementen erfolgt fächerartig. Die Abdeckelemente können eine flache Form haben und sich teilweise gegenseitig überlappen. Fächerartige Überlappung ist in Form einer Irisblende möglich. In dieser Ausführung ist es vorstellbar, einen größeren Griffbereich mit mehreren kleinen Abdeckelementen zu verdecken. Mehrere kleine Abdeckelemente in überlappender Anordnung sind stabiler gegen Belastung als ein einzelnes großes Abdeckelement.

Es ist ebenso zu bevorzugen, dass das mindestens eine Abdeckelement am Innenelement, dem Verbindungselement und/oder dem Außenelement stabilisiert wird. Die zusätzliche Stabilisierung des Abdeckelements an einem Element der Lenkhandhabe zeichnet sich durch eine höhere Belastbarkeit bei einem Stoß eines Fahrzeuginsassen gegen die Lenkhandhabe aus. Die Stabilisierung kann punktförmig oder auch mittels einer Schiene ausgestaltet sein. Durch die Schiene kann das Abdeckelement auf einer vorgegebenen Bahn verschoben werden, um den Griffbereich abhängig vom Fahrmodus freizugeben oder zu verdecken. Die Gefahr, dass das Abdeckelement verrutscht, herausbricht oder anderweitig seine vorgegebene Position verlässt, ist auf diese Weise geringer.

In einer anderen Ausgestaltung, die nicht beansprucht wird, sind im automatischen Fahrmodus entweder das Außenelement in seiner Form an das Innenelement oder das Innenelement in seiner Form an das Außenelement anpassbar. In beiden Fällen soll dadurch der Griffbereich zumindest teilweise verdeckt werden. Der Innendurchmesser des Außenelements kann auf den Außendurchmesser des Innenelements reduziert werden. Eine Vergrößerung des Außendurchmessers des Innenelements an den Innendurchmesser des Außenelements ist ebenso möglich. In beiden Ausgestaltungen wird das Verbindungselement derart geändert, dass es sich an die jeweilige Form des Außen- oder Innenelements anpasst. Auch vorstellbar ist, dass das Verbindungselement vom Fahrer weggeklappt wird, wenn das Außenelement seinen Durchmesser verringert und/oder das Innenelement seinen Durchmesser vergrößert. Sowohl das Verbindungselement, das Außenelement als auch das Innenelement können aus Teilelementen aufgebaut sein, die es ihnen erlauben, die Form zu ändern. Bei diesen Ausgestaltungen ist somit kein weiteres Bauteil notwendig, um eine zumindest teilweise Verdeckung des Griffbereichs zu erzielen. Darüber hinaus muss kein Bauteil im manuellen und/oder teilautomatischen Fahrmodus an geeigneter Stelle verstaut oder weggeklappt sein, um den Griffbereich für Eingriffe freizugeben.

Es ist ebenso zu bevorzugen, dass im automatischen Fahrmodus die Lenkhandhabe eine geschlossene und bündige Oberfläche in Richtung der Fahrzeuginsassen bildet. Das heißt, dass das Innenelement, das mindestens eine Verbindungselement und das Außenelement eine Ebene in Richtung des Fahrers bilden. Es gibt keine Einbuchtungen, Mulden oder Ausnehmungen in Richtung des Fahrers oder eines Fahrzeuginsassen von der Größe, dass ein Körperteil, z. B. ein Finger, hineinpasst. Der Griffbereich ist abgedeckt. Es besteht also keine Möglichkeit des Durchgreifens oder Durchstreckens in Zwischenräume der Lenkhandhabe mit Händen, Armen, Fingern oder anderen Körperteilen. Das Verletzungsrisiko an einer geschlossenen und bündigen Lenkhandhabe ist so nochmals minimiert, weil zum einen keine Elemente der Lenkhandhabe hervorstehen und zum anderen kein Körperteil in die Lenkhandhabe gelangen kann.

Vorstellbar ist, dass nicht der gesamte Griffbereich, sondern nur der vom Fahrer am häufigsten genutzte oder nur der ergonomisch optimierte Griffbereich nicht ausgebildet ist. So muss vorteilhafterweise nicht der gesamte Griffbereich abgedeckt werden, sondern nur die Bereiche, die der Fahrer am wahrscheinlichsten intuitiv greifen würde und die damit das größte Verletzungsrisiko für Finger und Hände bergen.

Erfindungsgemäß wird die Aufgabe weiterhin durch ein Verfahren zum Betrieb einer Lenkhandhabe eines Kraftfahrzeugs gelöst. Bei diesem Verfahren weist das Kraftfahrzeug einen automatischen Fahrmodus und mindestens einem teilautomatischen und/oder manuellen Fahrmodus auf. Die Lenkhandhabe umfasst ein Außenelement, ein Innenelement, ein Griffbereich und mindestens ein Verbindungselement zum Verbinden des Außenelements mit dem Innenelement. Wird ein Wechsel von einem teilautomatischen und/oder manuellen Fahrmodus in einen automatischen Fahrmodus des Kraftfahrzeugs erkannt, so soll der mindestens eine Griffbereich zumindest teilweise verdeckt werden. Dieser Wechsel von einem Fahrmodus in den anderen kann auf Wunsch des Fahrers und/oder bedingt durch eine Fahrsituation ausgelöst werden. Vorstellbar ist, dass der Fahrer einen entsprechenden Schalter aktiviert oder eine Spracheingabe tätigt. In Fahrsituationen mit einfachen Umgebungsbedingungen, wie z. B. die Kolonnenfahrt auf der Autobahn, kann ein automatischer Wechsel der Fahrmodi ausgelöst werden. Ein Fahrmoduswechsel ist ebenso in Situationen vorstellbar, in denen der Fahrer von einer Fahrsituation, z. B. beim Einparken, überfordert ist und in denen der automatische Fahrmodus die Aufgabe lösen kann. Die Lenkhandhabe kann einen solchen Wechsel über Sensoren und/oder direkt durch Informationssignale der zugehörigen Steuergeräte erkennen.

Vorstellbar ist auch der Wechsel von einem automatischen Fahrmodus des Kraftfahrzeugs in einen teilautomatischen und/oder manuellen Fahrmodus. Bei diesem Wechsel wird mindestens ein Griffbereich zumindest teilweise aufgedeckt.

In einer Ausgestaltung des Verfahrens wird mindestens ein Abdeckelement verschoben, so dass der Griffbereich zumindest teilweise verdeckt wird.

In einer anderen Ausgestaltung findet eine Verformung des Innenelements an das Außenelement oder umgekehrt statt, so dass durch diese Verformung der mindestens eine Griffbereich zumindest teilweise verdeckt ist.

In den nachfolgenden Zeichnungen und den zugehörigen Beschreibungen wird die Erfindung anhand zweier Ausführungsbeispiele beschrieben, wobei gleichbleibende Bezugszeichen sich auf identische Komponenten beziehen.

### Es zeigen

Fig. 1 ein Ausführungsbeispiel einer erfindungsgemäßen Lenkhandhabe im teilautomatischen und/oder manuellen Fahrmodus, in Draufsicht und in seitlicher Ansicht,
Fig. 2 das Ausführungsbeispiel aus Fig. 1 beim Wechsel in den automatischen Fahrmodus in einer Ausführungsform, in Draufsicht und in seitlicher Ansicht,
Fig. 3 das Ausführungsbeispiel aus Fig. 1 beim Wechsel in den automatischen Fahrmodus in einer anderen Ausführungsform, in Draufsicht und in seitlicher Ansicht,
Fig. 4 das Ausführungsbeispiel aus Fig. 1 beim Wechsel in den automatischen Fahrmodus in einer anderen Ausführungsform, in Draufsicht und in seitlicher Ansicht,
Fig. 5 ein weiteres Ausführungsbeispiel einer erfindungsgemäßen Lenkhandhabe im teilautomatischen und/oder manuellen Fahrmodus in Draufsicht,
Fig. 6 das Ausführungsbeispiel aus Fig. 5 beim Wechsel in den automatischen Fahrmodus in einer Ausführungsform in Draufsicht,
Fig. 7 das Ausführungsbeispiel aus Fig. 5 nach Wechsel in den automatischen Fahrmodus in einer weiteren Ausführungsform in Draufsicht,
Fig. 8 das Ausführungsbeispiel aus Fig. 5 nach Wechsel in den automatischen Fahrmodus in einer weiteren Ausführungsform in Draufsicht,
Fig. 9 das Ausführungsbeispiel aus Fig. 5 nach Wechsel in den automatischen Fahrmodus in einer weiteren Ausführungsform in Draufsicht,
Fig. 10 das Ausführungsbeispiel aus Fig. 5 nach Wechsel in den automatischen Fahrmodus in einer weiteren Ausführungsform in Draufsicht,
Fig. 11 das Ausführungsbeispiel aus Fig. 5 nach Wechsel in den automatischen Fahrmodus in einer weiteren Ausführungsform in Draufsicht.

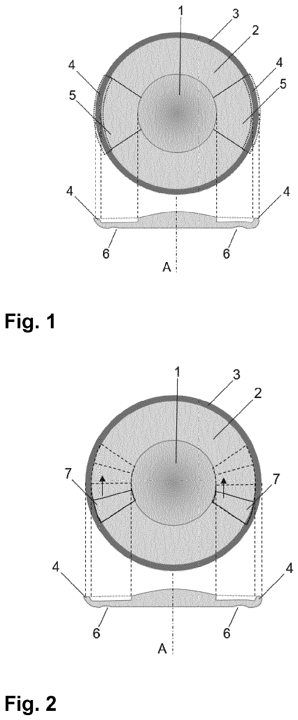

In Fig. 1 ist eine erfindungsgemäße Lenkhandhabe in Form eines Lenkrads im teilautomatischen und/oder manuellen Fahrmodus dargestellt. Das Lenkrad ist mit den Rädern mechanisch gekoppelt. Dieses Lenkrad umfasst ein Innenelement 1 in Form einer Lenkradnabe. Diese Lenkradnabe 1 stellt das Verbindungsstück zu einem nicht dargestellten Lenksystem dar und von dieser werden die Lenkradbewegung auf die Räder unter Rückkopplung übertragen. Neben der Lenkradnabe 1 gibt es ein kreisrundes Außenelement 3 in Form eines Lenkradkranzes. Den Lenkradkranz 3 kann der Fahrer an zwei vorgesehenen Griffbereichen 4 auf der linken und rechten Seite des Lenkrads umgreifen. Entsprechend der Fahraufgabe wird der Lenkradkranz 3 um die Rotationsachse A gedreht. Damit die Rotationsbewegung vom Lenkradkranz 3 auf die Lenkradnabe 1 und damit auf das restliche Lenksystem übertragen wird, sind der Lenkradkranz 3 und die Lenkradnabe 1 über ein Verbindungselement 2 verbunden. Dieses Verbindungselement 2 hat die Form eines flächigen Torus und ist in den Griffbereichen 4 ergonomisch für die Hände ausgebildet. Diese Gestaltung sieht auf der zum Fahrer zugewandten Seite des Lenkrads (Vorderseite) zwei Griffmulden 5 zur bequemen Ablage der Daumen vor. Auf der zum Fahrer abgewandten Seite des Lenkrads (Rückseite) befinden sich zwei weitere Griffmulden 6 für die restlichen Finger. Durch einen solchen Aufbau des Lenkrads kann der Fahrer dieses sicher umgreifen und das Fahrzeug führen. Die Griffmulden 5, 6 als Teil des Griffbereichs 4 sind nur für die teilautomatische und/oder manuelle Fahrt erforderlich. Das Lenkrad ist so aufgebaut, dass es keine Möglichkeit für einen Durchgriff gibt und ist damit geschlossen.

In Fig. 2, Fig. 3 und Fig. 4 ist das Lenkrad aus Fig. 1 in verschiedenen Ausführungsformen bei einem Wechsel in den automatischen Fahrmodus gezeigt. In diesem Fahrmodus kann der Fahrer die Hände vom Lenkrad nehmen. Erfindungsgemäß ist daher vorgesehen, dass zumindest die dem Fahrer zugewandten Griffmulden 5 durch geeignete Maßnahmen am Lenkrad zumindest teilweise geschlossen werden. Die Ausführungsform in Fig. 2 sieht vor, dass die beiden Griffmulden 5 auf den beiden Seiten des Lenkrads durch vier Abdeckelemente 7 vollständig verdeckt werden. Die Abdeckelemente 7 haben eine schieberartige, flache Form von der Größe eines Viertels der Griffmulde 5 und sind zur teilweise gegenseitigen Überlappung konzipiert. Im teilautomatischen und/oder manuellen Fahrmodus befinden sie sich in einem Verstauraum im Verbindungselement 2 und werden durch einen Linearmotor bei einem Wechsel in den automatischen Fahrmodus fächerartig und radial ausgefahren. Stabilisiert wird dieses Ausfahren dadurch, dass die Abdeckelemente 7 auf Schienen an der Lenkradnabe 1 und am Lenkradkranz 3 geführt werden und sich gegenseitig überlappen. In Fig. 2 ist ein Abdeckelement 7 schon an der für den automatischen Fahrmodus vorgesehenen Position. Die anderen drei Abdeckelemente 7 befinden sich unter dem ersten Abdeckelement bzw. im Verstauraum. Ihre vorgesehene Position im automatischen Fahrmodus ist durch gestrichelte Linien angedeutet. Im automatischen Fahrmodus bildet das Lenkrad auf diese Weise eine geschlossene und bündige Oberfläche in Richtung des Fahrers. Alle vier Abdeckelemente 7 bestehen wie ein Großteil der übrigen Elemente des Lenkrads aus Polyurethan PUR.

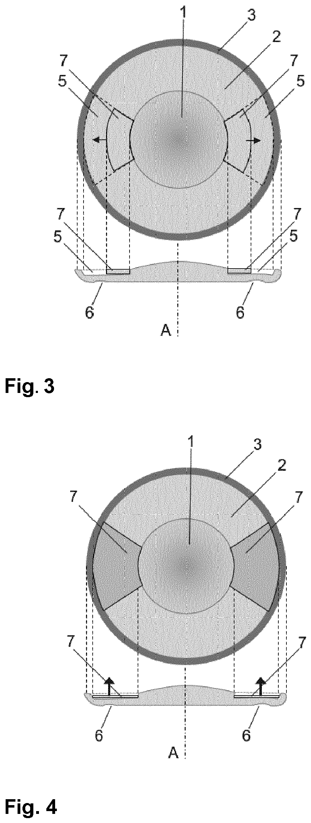

Anders als in Fig. 2 werden die beiden Griffmulden 5 auf der rechten und linken Seite des Lenkrads in der Ausführungsform der Fig. 3 nur durch jeweils ein Abdeckelement 7 verdeckt, das quer zur Rotationsachse A ausgefahren wird. Die Abdeckelemente 7 bestehen aus flexiblem Polyamidgewebe, das in einem Rahmen aufgespannt ist. Auf diese Weise wird bei einem Unfall die Verletzungsgefahr für die Fahrzeuginsassen reduziert. In Fig. 3 ist ein Zwischenzustand beim Ausfahren der Abdeckelemente 7 gezeigt. Die finale Position der Abdeckelemente 7 ist in gestrichelten Linien dargestellt.

In Fig. 4 wird die Griffmulde 5 mit zwei elastischen, hohlkörperartigen Abdeckelementen 7 vollständig überdeckt. Diese Butyl-umfassenden Abdeckelemente 7 werden bei einem Wechsel in den automatischen Fahrmodus mit Druckluft gefüllt, so dass sie sich bis auf die Ebene des Lenkradkranzes 3 und der Lenkradnabe 1 ausdehnen und dabei den Griffbereich 4 verdecken. Sowohl in Fig. 2, in Fig. 3 als auch in Fig. 4 findet keine Überdeckung der Griffmulden 5 auf der Rückseite des Lenkrads statt, da ein versehentliches Eingreifen des Fahrers in diesen Lenkradbereichen unwahrscheinlich ist.

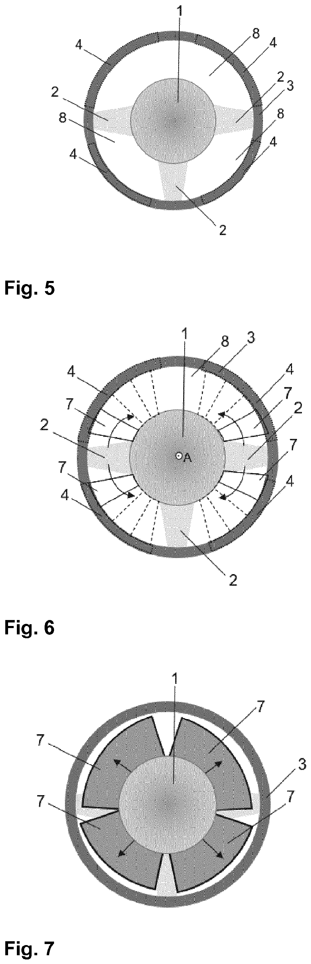

In Fig. 5 ist ein weiteres Ausführungsbeispiel einer erfindungsgemäßen, gekoppelten Lenkhandhabe im teilautomatischen und/oder manuellen Fahrmodus in Draufsicht dargestellt. Das Design der Lenkhandhabe entspricht dem heute gängigen Aufbau eines Lenkrads aus Lenkradnabe als Innenelement 1, Lenkradkranz als Außenelement 3 und drei Speichen als Verbindungselemente 2. Die Speichen 2 verbinden nicht den gesamten Lenkradkranz 3 mit der Lenkradnabe 1; in Richtung des Fahrers hat das Lenkrad großflächige Durchgriffe 8. Diese Durchgriffe 8 erlauben es dem Fahrer im teilautomatischen und/oder manuellen Fahrmodus den Lenkradkranz 3 mit beiden Händen zu umschließen und das Fahrzeug sicher zu führen. Häufig verwendete Griffbereiche 4 sind in gepunkteten Linien am Lenkradkranz 3 eingezeichnet.

Fig. 6 bis Fig. 11 zeigen das Lenkrad aus Fig. 5 beim bzw. nach Wechsel in den automatischen Fahrmodus in sechs Ausführungsformen. Damit das Risiko einer Verletzung der Hände und Finger eines Fahrers bei schnellen Fahrmanövern durch die Rotation des Lenkrads verringert wird, werden die innerhalb des Lenkradkranzes 3 vorhandenen Durchgriffe 8 und Griffbereiche 4 durch Abdeckelemente 7 teilweise verschlossen. In Fig. 6 klappen jeweils vier Abdeckelemente 7 pro Griffbereich 4 aus den Speichen 2 heraus. Es wird nicht der komplette Griffbereich 4 und auch nicht die gesamte Durchgriffsfläche, sondern nur die am häufigsten vom Fahrer genutzten oder die für eine Verletzung am risikoreichsten Bereiche abgedeckt. Die Abdeckelemente 7 haben eine flache Form und öffnen sich schieberartig, radial zur Rotationsachse A. Zur Stabilisierung werden die Abdeckelemente 7 an der Lenkradnabe 1 geführt. Wie in den vorherigen Figuren befindet sich das jeweils erste Abdeckelement 7 in der für den automatischen Fahrmodus finalen Position - die jeweils anderen drei Abdeckelemente 7 liegen hinter dem ersten bzw. klappen aus den Speichen 2 heraus. Die finale Position der drei Abdeckelemente 7 ist durch die gestrichelten Linien angedeutet. In Fig. 7 ist die Ausführungsform gezeigt, bei der die vier Abdeckelemente 7 aus der Lenkradnabe 1 heraus radial nach außen aufgespannt werden, so dass die großen Flächen der Durchgriffe 8 abgedeckt und die Griffbereiche 4 ergonomisch schlecht für den Fahrer greifbar sind. Die Abdeckelemente 7 bestehen aus einem elastischen, stoßabsorbierenden Gewebe.

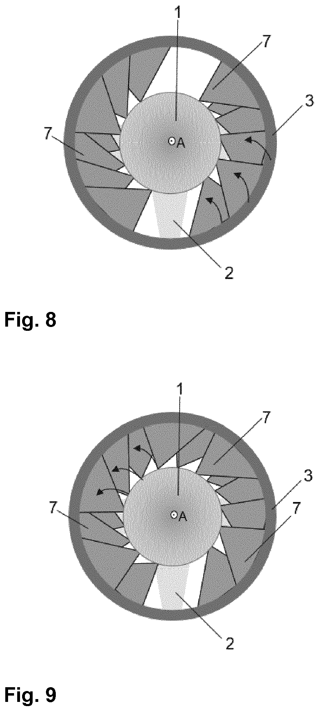

Fig. 8 und Fig. 9 zeigen die Ausführungsform, bei der vorhandene Durchgriffe 8 und Griffbereiche 4 nach Aktivierung des automatischen Fahrmodus durch mehrere fächerförmige Abdeckelemente 6 nach dem Prinzip der Irisblende einer Kamera verschlossen werden. Die Abdeckelemente 7 können dabei eine wie in Fig. 8 und Fig. 9 dargestellte eckige, aber auch eine halbkreisförmige Geometrie aufweisen. Sie bestehen aus einer Formgedächtnislegierung, so dass das Verschieben der Abdeckelemente 7 mittels einer thermischen bzw. magnetischen Anregung der Abdeckelemente 7 erfolgt. In Fig. 8 haben sich die Abdeckelemente 7 aus Richtung des Lenkradkranzes 3 und in Fig. 9 aus Richtung der Lenkradnabe 1 aufgeklappt.

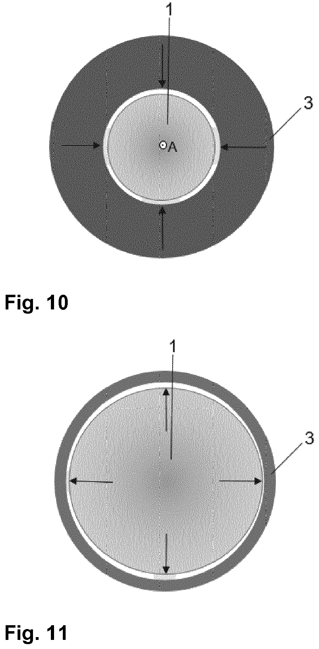

In Fig. 10 wird eine Ausführungsform, die nicht beansprucht wird, für hochdynamischen Fahrmanövern gezeigt, bei der eine Veränderung des Lenkrads für den erforderlichen Insassenschutz notwendig ist. Im automatischen Fahrmodus vergrößert sich der Lenkradkranz 3 in der Form, dass sich sein Innendurchmesser fast bis auf den Außendurchmesser der Lenkradnabe 1 stoßartig ausdehnt. Auf diese Weise ist es für einen Fahrer ergonomisch schwierig, den Lenkradkranz 3 zu greifen. Das heißt, dass die Griffbereiche 4 als auch die Durchgriffe 8 werden verdeckt. Der Lenkradkranz 3 ist ein elastischer Hohlkörper, der sich beim Befüllen mit Druckluft senkrecht zur Rotationsachse A ausdehnt. Die nach hinten versetzten Speichen 2 verändern ihre Form nicht. Auf ähnliche Weise kann sich die Außenkontur der Lenkradnabe 1 in Richtung der Innenkontur des Lenkradkranzes 3 erweitern, wie in Fig. 11 dargestellt.

### Bezugszeichenliste

- A: Rotationsachse
- 1: Innenelement, Lenkhandhabenabe
- 2: Verbindungselement, Speichen
- 3: Außenelement, Lenkhandhabekranz
- 4: Griffbereich
- 5.: Griffmulde auf Vorderseite
- 6: Griffmulde auf Rückseite
- 7: Abdeckelement, Schieber
- 8: Durchgriff

## Patentansprüche

1. Lenkhandhabe für ein Kraftfahrzeug mit einem automatischen Fahrmodus und mindestens einem teilautomatischen und/oder manuellen Fahrmodus, wobei
- die Lenkhandhabe ein Innenelement (1), ein Außenelement (3) und mindestens ein Verbindungselement (2) zum Verbinden des Außenelements (3) mit dem Innenelement (1) umfasst,
- im teilautomatischen und/oder manuellen Fahrmodus die Lenkhandhabe mindestens einen Griffbereich (4) aufweist, der einen Eingriff eines Fahrzeuginsassen an der Lenkhandhabe ermöglicht,
- im automatischen Fahrmodus der mindestens eine Griffbereich (4) zumindest teilweise verdeckt ist,
**dadurch gekennzeichnet, dass**
die Lenkhandhabe mindestens zwei Abdeckelemente (7) umfasst und die mindestens zwei Abdeckelemente (7) im automatischen Fahrmodus fächerartig den mindestens einen Griffbereich (4) zumindest teilweise verdecken.

2. Lenkhandhabe nach Anspruch 2 oder 3 **dadurch gekennzeichnet, dass** das mindestens eine Abdeckelement (7) an dem Innenelement (1) und/oder dem Außenelement (3) stabilisiert ist.

3. Lenkhandhabe nach einem der vorherigen Ansprüche **dadurch gekennzeichnet, dass** im automatischen Fahrmodus die Lenkhandhabe eine geschlossene und bündige Oberfläche in Richtung des Fahrers des Fahrzeugs bildet.

4. Verfahren zum Betrieb einer Lenkhandhabe eines Kraftfahrzeugs, wobei
- das Kraftfahrzeug einen automatischen Fahrmodus und mindestens einen teilautomatischen und/oder manuellen Fahrmodus aufweist,
- die Lenkhandhabe ein Außenelement (3), ein Innenelement (1), ein Griffbereich (4) und mindestens ein Verbindungselement (2) zum Verbinden des Außenelements mit dem Innenelement (1), und mindestens zwei Abdeckelemente (7) umfasst,
- das Verfahren folgende Schritte umfasst:
o Erkennen eines Wechsels von einem teilautomatischen und/oder manuellen Fahrmodus in den automatischen Fahrmodus des Kraftfahrzeugs,
o zumindest teilweises Verdecken des mindestens einen Griffbereichs (4), wenn ein Wechsels von einem teilautomatischen und/oder manuellen Fahrmodus in den automatischen Fahrmodus des Kraftfahrzeugs erkannt wird,
**gekennzeichnet durch** fächerartiges Verdecken des mindestens einen Griffbereich (4) durch die mindestens zwei Abdeckelemente (7).

## Claims

1. Steering handle for a motor vehicle with an automatic driving mode and at least one semi-automatic and/or manual driving mode, wherein
- the steering handle comprises an inner element (1), an outer element (3) and at least one connecting element (2) for connecting the outer element (3) to the inner element (1),
- in the semi-automatic and/or manual driving mode, the steering handle has at least one gripping region (4) which permits a vehicle occupant to intervene on the steering handle,
- in the automatic driving mode, the at least one gripping region (4) is at least partially concealed,
**characterized in that**
the steering handle comprises at least two covering elements (7) and the at least two covering elements (7) at least partially conceal the at least one gripping region (4) in the manner of a fan in the automatic driving mode.

2. Steering handle according to Claim 2 or 3, **characterized in that** the at least one covering element (7) is stabilized on the inner element (1) and/or the outer element (3).

3. Steering handle according to either of the preceding claims, **characterized in that** the steering handle forms a closed and flush surface in the direction of the driver of the vehicle in the automatic driving mode.

4. Method for operating a steering handle of a motor vehicle, wherein
- the motor vehicle has an automatic driving mode and at least one semi-automatic and/or manual driving mode,
- the steering handle comprises an outer element (3), an inner element (1), a gripping region (4) and at least one connecting element (2) for connecting the outer element to the inner element (1), and at least two covering elements (7),
- the method comprises the following steps:
o detecting a change from a semi-automatic and/or manual driving mode into the automatic driving mode of the motor vehicle,
o at least partially concealing the at least one gripping region (4) if a change from a semi-automatic and/or manual driving mode into the automatic driving mode of the motor vehicle is identified,
**characterized by** a fan-like concealing of the at least one gripping region (4) by the at least two covering elements (7).

## Revendications

1. Manette de direction pour un véhicule automobile avec un mode de conduite automatique et au moins un mode de conduite semi-automatique et/ou manuel,
- la manette de direction comprenant un élément intérieur (1), un élément extérieur (3) et au moins un élément de liaison (2) pour relier l'élément extérieur (3) à l'élément intérieur (1),
- dans le mode de conduite semi-automatique et/ou manuel, la manette de direction présentant au moins une zone de préhension (4), qui permet une intervention d'un occupant du véhicule sur la manette de direction,
- dans le mode de conduite automatique, l'au moins une zone de préhension (4) étant au moins partiellement masquée,
**caractérisée en ce que**
la manette de direction comprend au moins deux éléments de recouvrement (7) et, dans le mode de conduite automatique, les au moins deux éléments de recouvrement (7) masquent au moins partiellement l'au moins une zone de préhension (4) à la manière d'un éventail.

2. Manette de direction selon la revendication 2 ou 3, **caractérisée en ce que** l'au moins un élément de recouvrement (7) est stabilisé sur l'élément intérieur (1) et/ou l'élément extérieur (3).

3. Manette de direction selon l'une quelconque des revendications précédentes, **caractérisée en ce que,** dans le mode de conduite automatique, la manette de direction forme une surface fermée et continue en direction du conducteur du véhicule.

4. Procédé d'exploitation d'une manette de direction d'un véhicule automobile,
- le véhicule automobile présentant un mode de conduite automatique et au moins un mode de conduite semi-automatique et/ou manuel,
- la manette de direction comprenant un élément extérieur (3), un élément intérieur (1), une zone de préhension (4) et au moins un élément de liaison (2) pour relier l'élément extérieur à l'élément intérieur (1), et au moins deux éléments de recouvrement (7),
- le procédé comprenant les étapes suivantes :
o la détection d'un passage d'un mode de conduite semi-automatique et/ou manuel au mode de conduite automatique du véhicule automobile,
o le masquage au moins partiel de l'au moins une zone de préhension (4) lorsqu'un passage d'un mode de conduite semi-automatique et/ou manuel au mode de conduite automatique du véhicule automobile est détecté, **caractérisé par** le masquage de l'au moins une zone de préhension (4) à la manière d'un éventail par les au moins deux éléments de recouvrement (7).
